(19)

Europäisches
Patentamt
European
Patent Office
Office européen
des brevets

(11) **EP 4 755 926 A1**

(12) **EUROPEAN PATENT APPLICATION**
published in accordance with Art. 153(4) EPC

(43) Date of publication:
**10.06.2026  Bulletin 2026/24**

(21) Application number: **24851581.9**

(22) Date of filing: **22.07.2024**

(51) International Patent Classification (IPC):
**C08C 19/08** (2006.01)   **C08J 11/10** (2006.01)

(52) Cooperative Patent Classification (CPC):
**C08C 19/085; C08J 11/10;** Y02W 30/62

(86) International application number:
**PCT/JP2024/026173**

(87) International publication number:
**WO 2025/033152 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023  JP 2023128057**

(71) Applicants:
• **BRIDGESTONE CORPORATION
Chuo-ku
Tokyo 104-8340 (JP)**
• **National Institute of Advanced Industrial
Science and Technology
Chiyoda-ku
Tokyo 100-8921 (JP)**

(72) Inventors:
• **FUKAYA, Norihisa**
**Tsukuba-shi, Ibaraki 305-8561 (JP)**
• **YAMASHITA, Hiroshi**
**Tsukuba-shi, Ibaraki 305-8561 (JP)**

• **HATORI, Makiko**
**Tsukuba-shi, Ibaraki 305-8561 (JP)**
• **SUGIKI, Makoto**
**Tsukuba-shi, Ibaraki 305-8561 (JP)**
• **WAHYU, Satpriyo Putro**
**Tsukuba-shi, Ibaraki 305-8561 (JP)**
• **CHOI, Jun-Chul**
**Tsukuba-shi, Ibaraki 305-8561 (JP)**
• **MATSUMOTO, Kazuhiro**
**Tsukuba-shi, Ibaraki 305-8561 (JP)**
• **NASHI, Takayuki**
**Tokyo 104-8340 (JP)**
• **HOMMA, Masahiro**
**Tokyo 104-8340 (JP)**
• **TAHARA, Seiichi**
**Tokyo 104-8340 (JP)**
• **HOJO, Masahiro**
**Tokyo 104-8340 (JP)**

(74) Representative: **Marks & Clerk LLP**
**15 Fetter Lane**
**London EC4A 1BW (GB)**

(54) **METHOD FOR DECOMPOSING VULCANIZED RUBBER**

(57)   With the aim of providing an efficient decomposition method for vulcanized rubber, a decomposition method for vulcanized rubber includes a first decomposition step of causing a radical initiator to act on vulcanized rubber or a composition containing the vulcanized rubber under an atmosphere containing oxygen gas to thereby cause conversion into a soluble decomposition product, and a second decomposition step of converting the soluble decomposition product obtained in the first decomposition step into a low molecular weight compound having 10 or fewer carbon atoms through thermal decomposition.

EP 4 755 926 A1

**Description**

TECHNICAL FIELD

The present disclosure relates to a decomposition method for vulcanized rubber.

BACKGROUND

Regarding the recycling of vulcanized rubber products such as tire rubber, conventionally, they are often reused as fuel in cement plants and the like, which has also become a factor in increasing carbon dioxide emissions. However, since carbon dioxide emissions promote global warming, from the viewpoint of reducing carbon dioxide emissions to suppress global warming, there is a demand for the development of new reuse methods for rubber products. In particular, chemical recycling technology, in which rubber products are decomposed into low molecular weight compounds such as soluble polymers or monomers while maintaining their basic skeleton and then used to manufacture rubber products again, has the advantage that it is possible to regenerate rubber products having performance equivalent to the original rubber products.

As decomposition methods for vulcanized rubber, methods such as thermally decomposing vulcanized rubber at high temperatures (usually 400°C or higher) (PTL 1, 2, etc.) and methods of decomposing polyisoprene-based rubber using microorganisms (PTL 3) are known.

CITATION LIST

(Patent Literature)

PTL 1: US 3,704,108 A
PTL 2: JP H07-310076 A
PTL 3: JP 2009-247241 A

SUMMARY

(Technical Problem)

In chemical recycling of vulcanized rubber, it is important to improve the yield of low molecular weight compounds such as soluble polymers and monomers generated by the decomposition of vulcanized rubber.

However, in methods in which vulcanized rubber is thermally decomposed at high temperatures, since the selectivity of products in the thermal decomposition is low, it is difficult to obtain soluble polymers that maintain the basic skeleton of the rubber product, and in many cases, it is also difficult to efficiently obtain specific low molecular weight compounds such as monomers. Furthermore, in methods in which vulcanized rubber is decomposed using microorganisms, although the decomposition of the rubber itself proceeds, there are problems such as requiring a very long time.

Therefore, the present disclosure addresses the above problems of the prior art, and an object thereof is to provide a decomposition method for vulcanized rubber that makes it possible to improve the yield of low molecular weight compounds such as soluble polymers and monomers while maintaining the basic skeleton of the original rubber product.

(Solution to Problem)

As a result of intensive research to solve the above problems, the inventors of the present disclosure have found that, by dividing the decomposition process of vulcanized rubber into a first decomposition step in which a radical initiator is caused to act on the vulcanized rubber under an atmosphere containing oxygen gas to solubilize the vulcanized rubber, and a second decomposition step in which the solubilized decomposition product is thermally decomposed, the rubber component in the vulcanized rubber can be decomposed into a soluble polymer while maintaining the basic skeleton of the original rubber product in the first decomposition step, and the generated soluble polymer can be efficiently decomposed into low molecular weight compounds such as monomers in the second decomposition step, thereby completing the present disclosure.

The gist of the present disclosure for solving the above problems is as follows.

<1> A decomposition method for vulcanized rubber comprising:

a first decomposition step of causing a radical initiator to act on vulcanized rubber or a composition containing the vulcanized rubber under an atmosphere containing oxygen gas to thereby cause conversion into a soluble decomposition product; and

a second decomposition step of converting the soluble decomposition product obtained in the first decomposition step into a low molecular weight compound having 10 or fewer carbon atoms through thermal decomposition.

<2> The decomposition method according to <1>, wherein a rubber component of the vulcanized rubber is a rubber component including at least one selected from natural rubber (NR), synthetic isoprene rubber (IR), butadiene rubber (BR), and styrene-butadiene rubber (SBR).

<3> The decomposition method according to <1> or <2>, wherein the composition containing the vulcanized rubber is a composition selected from tire rubbers containing carbon black or silica.

<4> The decomposition method according to any one of <1> to <3>, wherein the radical initiator is a radical initiator selected from azo compounds and peroxides.

<5> The decomposition method according to <4>, wherein the peroxide is a peroxide selected from acyl peroxides.

<6> The decomposition method according to <5>, wherein the acyl peroxide is an acyl peroxide selected from benzoyl peroxide, lauroyl peroxide, and acetyl peroxide.

<7> The decomposition method according to any one of <1> to <6>, wherein the thermal decomposition in the second decomposition step is thermal decomposition where a reaction is performed in a temperature range of 400°C to 900°C.

<8> The decomposition method according to any one of <1> to <7>, wherein the thermal decomposition in the second decomposition step is thermal decomposition where a reaction is performed in the presence of a catalyst.

<9> The decomposition method according to any one of <1> to <8>, wherein a decomposition method in the first decomposition step is a decomposition method using a chlorinated hydrocarbon or an aromatic hydrocarbon as a solvent.

<10> The decomposition method according to <9>, wherein the chlorinated hydrocarbon is a chlorinated hydrocarbon selected from chloroform and chlorobenzene.

<11> The decomposition method according to <9>, wherein the aromatic hydrocarbon is ethylbenzene.

<12> The decomposition method according to any one of <1> to <11>, wherein the vulcanized rubber is vulcanized rubber that has undergone a pretreatment step of washing with a solvent.

In a preferred example of the decomposition method for vulcanized rubber of the present disclosure, the vulcanized rubber contains carbon black. Even in this case, the vulcanized rubber can be efficiently decomposed, and the carbon black can also be reused.

Decomposition by a radical initiator, unlike ordinary thermal decomposition, does not require high temperatures, so the vulcanized rubber can be converted into a soluble decomposition product under relatively mild conditions. The soluble decomposition product is, specifically, a soluble polymer derived from the rubber component in the vulcanized rubber and a composition containing the same (hereinafter, sometimes referred to as a soluble polymer composition), and "soluble" means that it can be dissolved in a solvent (for example, if a solvent is used in the first decomposition step, the solvent used). In addition, since the decomposition reaction does not require high temperatures, it is also possible to improve the retention rate of the monomer skeleton (isoprene skeleton, butadiene skeleton, etc.) in the vulcanized rubber.

In the second decomposition step of the decomposition method for vulcanized rubber of the present disclosure, by thermally decomposing the soluble product obtained in the first decomposition step, it can be decomposed into low molecular weight monomer compounds having 10 or fewer carbon atoms.

Since the skeleton retention rate of the rubber component is high in the first decomposition step of the present disclosure, the yield of the monomer compounds finally obtained can be improved.

(Advantageous Effect)

According to the present disclosure, since vulcanized rubber can be efficiently converted into soluble polymers and monomers while maintaining the skeleton, it is possible to provide an efficient decomposition method for vulcanized rubber.

DETAILED DESCRIPTION

Hereinafter, the decomposition method for vulcanized rubber according to the present disclosure will be exemplified and described in detail based on its embodiment.

<First Decomposition Step>

In the decomposition method for vulcanized rubber of the present embodiment, a first decomposition step is included in which a radical initiator is caused to act on vulcanized rubber or a composition containing the same under an atmosphere containing oxygen gas.

The radical initiator used in the first decomposition step of the present disclosure is considered to mainly act on the crosslinked sites formed by sulfur, thereby cleaving the crosslinking bonds. Therefore, in the case of diene rubber, it is considered that the main chain skeleton is basically maintained even after the decomposition reaction.

(Vulcanized Rubber)

The vulcanized rubber to be decomposed in the decomposition method of the present embodiment is, for example, one containing diene rubber having crosslinked sites containing sulfur atoms, and may further contain carbon black, silica, or the like.

The radical initiator used in the first decomposition step is basically considered to decompose the vulcanized rubber by acting on the sulfur crosslinked sites.

The form of the vulcanized rubber is not limited, and may be, for example, powdered rubber or the like. Such powdered rubber can be obtained by cutting and pulverizing used rubber products such as waste tires. The pulverization step may include multiple steps such as a preliminary pulverization step and a fine pulverization step, and after the pulverization step, a classification step may be performed to adjust the particle size of the powdered rubber to be used.

Further, as the composition containing the vulcanized rubber, waste rubber subjected to recycling, used rubber products, or the like may be used. Waste rubber is not limited to that generated from rubber products, but refers to all discarded rubber including unnecessary scraps generated during production or repair of rubber products. Examples of scraps include buffing powder, peeling rubber, and the like. Buffing powder is fine rubber generated, for example, in the buffing step of retreading tires, where the tread portion remaining on the base tire is shaved off. Peeling rubber is, for example, a long strip of rubber with a width of about 1 to 2 cm, stripped from the surface of rubber products such as tires. Peeling rubber is generated by shaving the surface of rubber products such as tires using a knife with a U-shaped or V-shaped tip as a peeler. Rubber products include, for example, final products such as tires, rubber hoses, rubber conveyor belts, and rubber parts or components in the manufacturing stage of final products. Used tires may be those subjected to retreading, or waste tires generated due to tire replacement, vehicle scrapping, or the like, as well as ELT (End-of-Life Tire) that have reached the end of their service life as tires, or those discarded for any reason. As the composition containing the vulcanized rubber, tire rubber containing carbon black or silica is preferred.

--Diene Rubber--

The diene rubber is rubber containing units (diene units) derived from diene monomers, and may further contain units derived from copolymerizable comonomers.

The units derived from diene monomers enable crosslinking (vulcanization) of the diene rubber and impart elongation and strength characteristic of rubber. In the vulcanized rubber, the diene rubber is usually present in a crosslinked state, but a portion may be uncrosslinked. Specific examples of diene monomers (diene compounds) include 1,3-butadiene, isoprene, 1,3-pentadiene, 2,3-dimethyl-1,3-butadiene, and the like.

On the other hand, examples of copolymerizable comonomers include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Further, examples of the diene rubber include isoprene skeleton rubber, styrene-butadiene rubber (SBR), butadiene rubber (BR), chloroprene rubber (CR), and the like. Here, isoprene skeleton rubber is rubber having isoprene units as the main skeleton, and specific examples include natural rubber (NR), synthetic isoprene rubber (IR), and the like. Among these, it is preferable that the diene rubber includes at least one selected from the group consisting of isoprene skeleton rubber, styrene-butadiene rubber, and butadiene rubber. When the diene rubber includes at least one selected from the group consisting of isoprene skeleton rubber, styrene-butadiene rubber, and butadiene rubber, diene monomers such as isoprene and butadiene, which are easily reusable, can be obtained by the second decomposition step following the first decomposition step.

The content of the diene rubber in the vulcanized rubber is not particularly limited, and is preferably in the range of, for example, 10 to 100 mass%, and more preferably in the range of 30 to 100 mass% from the viewpoint of further improving the yield of monomer compounds after the second decomposition step.

--Sulfur--

In the vulcanized rubber, sulfur is usually present in a state of crosslinking the diene rubber (as a bridge of the diene rubber), but a portion may be free.

In the decomposition method for vulcanized rubber of the present disclosure, in the first decomposition step, decomposition is performed by causing a radical initiator to act, thereby decomposing the diene rubber and converting it into a soluble polymer. Therefore, even if the vulcanized rubber contains sulfur, after the first decomposition step, for example, sulfur can be easily recovered by solid-liquid separation. By recovering sulfur before the thermal decomposition in the second decomposition step, sulfur can be reused. Further, even when a catalyst is used in the second decomposition step, it is possible to prevent sulfur from acting as a catalyst poison or the decomposition products from being revulcanized by sulfur.

The content of sulfur in the vulcanized rubber is not particularly limited, and is, for example, in the range of 0.1 to 10 parts by mass per 100 parts by mass of the diene rubber, and preferably in the range of 1 to 5 parts by mass.

--Carbon Black--

The vulcanized rubber may further contain carbon black. In the decomposition method for vulcanized rubber of the present disclosure, in the first decomposition step, decomposition is performed by causing a radical initiator to act, thereby decomposing the diene rubber and converting it into a soluble polymer. Therefore, even if the vulcanized rubber contains carbon black, after the first decomposition step, for example, carbon black can be easily separated and recovered by solid-liquid separation.

By recovering carbon black before the thermal decomposition in the second decomposition step, it can be reused as high-quality carbon black. Further, even when a catalyst is used in the second decomposition step, it is possible to prevent carbon black from acting as a catalyst poison or causing coking. Accordingly, even when the vulcanized rubber contains carbon black, the vulcanized rubber can be efficiently decomposed.

The content of carbon black in the vulcanized rubber is not particularly limited, and is, for example, in the range of 10 to 150 parts by mass per 100 parts by mass of the diene rubber, and preferably in the range of 30 to 120 parts by mass.

--Other Components--

The vulcanized rubber may further contain, in addition to the above diene rubber, carbon black, and sulfur, various components commonly used in the rubber industry, for example, rubber components other than diene rubber, fillers other than carbon black (such as silica, calcium carbonate), silane coupling agents, antioxidants, softeners, processing aids, resins, surfactants, organic acids (such as stearic acid), zinc oxide (zinc white), vulcanization accelerators, crosslinking agents other than sulfur, and the like.

(Radical Initiator for First Decomposition Step)

In the decomposition method for vulcanized rubber of the present embodiment, a radical initiator is used in the first decomposition step.

As the radical initiator, various conventionally known types can be used, but from the viewpoint of reaction efficiency, peroxides and azo compounds are preferred, and peroxides are more preferably used.

Examples of peroxides include acyl peroxides, percarboxylic acids, dialkyl peroxides, and alkyl hydroperoxides. Among these, from the viewpoint of reaction rate, acyl peroxides and percarboxylic acids are preferably used, and acyl peroxides are more preferably used.

Specific examples thereof include, as acyl peroxides, benzoyl peroxide, toluoyl peroxide, chlorobenzoyl peroxide, dichlorobenzoyl peroxide, methoxybenzoyl peroxide, phthaloyl peroxide, acetyl peroxide, propanoyl peroxide, caprylyl peroxide, decanoyl peroxide, lauroyl peroxide, myristoyl peroxide, stearoyl peroxide, and the like. Among acyl peroxides, from the viewpoints of reaction rate, cost, and ease of procurement, benzoyl peroxide, lauroyl peroxide, and acetyl peroxide are preferably used. From the viewpoints of reaction rate and stability of the peroxide, lauroyl peroxide is preferred over benzoyl peroxide.

Further, examples of percarboxylic acids include perbenzoic acid, chloroperbenzoic acid, peracetic acid, perpropionic acid, and the like. Examples of dialkyl peroxides include di-tert-butyl peroxide, dicumyl peroxide, tert-butyl cumyl peroxide, and the like, and examples of alkyl hydroperoxides include tert-butyl hydroperoxide, cumene hydroperoxide, and the like.

On the other hand, examples of azo compounds include azobisisobutyronitrile, azobis-2,4-dimethylvaleronitrile, azobiscyclohexanecarbonitrile, azobismethyl isobutyrate, and the like.

These radical initiators may be in the form of hydrates from the viewpoints of safety, ease of procurement, and the like. By using a suitable initiator, the vulcanized rubber can be efficiently decomposed under mild conditions.

The amount of the radical initiator used is preferably 0.1 part by mass or more, more preferably 1 part by mass or more, and preferably 30 parts by mass or less, more preferably 20 parts by mass or less, per 100 parts by mass of the vulcanized rubber. If the amount of the radical initiator is 0.1 part by mass or more per 100 parts by mass of the vulcanized rubber, the decomposition reaction of the vulcanized rubber proceeds more rapidly, and if the amount of the radical initiator is 30 parts by mass or less per 100 parts by mass of the vulcanized rubber, it is preferable from the viewpoint of cost.

(Reaction Conditions for First Decomposition Step)

The first decomposition step is carried out under an atmosphere containing oxygen gas.

The concentration (vol%) of oxygen gas in the reaction atmosphere is usually 1 to 100%, preferably 1 to 80%, and more preferably 5 to 50%, including about 20%, which is the oxygen concentration in air. If the concentration of oxygen gas is not 100%, the remaining gas component may be an inert gas such as nitrogen gas. In general, the higher the oxygen concentration, the more advantageous the decomposition reaction, but undesirable side reactions are also more likely to occur, so when the oxygen concentration is high, it is necessary to appropriately control the reaction time, reaction temperature, and the like.

On the other hand, when using air with an oxygen concentration of about 20%, it is not necessary to separately prepare oxygen gas, which is advantageous in terms of equipment and economy. In reactions under an air atmosphere, if the amount of vulcanized rubber is small, the reaction proceeds even in a closed system container with a sufficiently large internal volume. In such a case, the internal volume of the reaction vessel is generally 50 parts by volume or more, more preferably 100 parts by volume or more, per 1 part by volume of vulcanized rubber.

When the decomposition reaction is carried out in a closed system, if the amount of vulcanized rubber increases, a reaction vessel with a large internal volume is required, which is not preferable from the viewpoint of equipment. Therefore, from the viewpoint of equipment, it is preferable to carry out the reaction in an open system in which air or the like can circulate. To make the reaction system open, methods such as opening a part of the reaction vessel, attaching a membrane that allows circulation of air or the like, or overflowing air or the like can be considered. In addition, a method in which air or the like is continuously or intermittently blown into the solution during the reaction is also an advantageous form. The blowing rate in such a case is not particularly limited, but is usually 1 to 1000 mL/min, preferably 2 to 500 mL/min, more preferably 3 to 200 mL/min, per 1 g of vulcanized rubber.

In the first decomposition step for vulcanized rubber of the present embodiment, the radical initiator may be dissolved in a solvent for use, or the vulcanized rubber may be immersed in a solvent for decomposition. By causing the radical initiator to act on the vulcanized rubber in a solvent, the decomposition of the vulcanized rubber is facilitated.

Here, as the solvent, any solvent that does not inhibit the decomposition reaction can be used, and examples include aromatic hydrocarbons (aromatic solvents), chlorinated hydrocarbons, aliphatic hydrocarbons, alicyclic hydrocarbons, ethers, and the like.

Specific examples thereof include, as aromatic hydrocarbons, toluene, xylene, ethylbenzene, trimethylbenzene, propylbenzene, and the like; as chlorinated hydrocarbons, chloroform, dichloromethane, dichloroethane, trichloroethane, tetrachloroethane, tetrachloroethylene, chlorobenzene, dichlorobenzene, and the like; as aliphatic hydrocarbons, pentane, hexane, octane, and the like; as alicyclic hydrocarbons, cyclopentane, cyclohexane, cyclooctane, and the like; and as ethers, tetrahydrofuran, methyltetrahydrofuran, tetrahydropyran, dioxane, and the like.

Among these, from the viewpoints of reaction rate and ease of procurement, aromatic hydrocarbons and chlorinated hydrocarbons are preferred. Specific examples thereof include toluene, xylene, ethylbenzene, chloroform, chlorobenzene, dichlorobenzene, and the like. Among aromatic hydrocarbons, ethylbenzene is preferred over toluene from the viewpoint of reaction rate.

The solvent suitable for the decomposition reaction also depends on the type of vulcanized rubber. For example, in the case of NR-based, IR-based, or BR-based vulcanized rubber, aromatic hydrocarbons and chlorinated hydrocarbons are preferred from the viewpoints of reaction rate and solubility of the product, and specific examples thereof include toluene, ethylbenzene, chloroform, chlorobenzene, and the like. On the other hand, in SBR-based vulcanized rubber, chlorinated hydrocarbons are more preferred from the viewpoint of reaction rate, and specific examples thereof include chloroform, chlorobenzene, and the like.

By using a preferred solvent, the decomposition of vulcanized rubber is facilitated, and a soluble polymer can be produced more efficiently.

The amount of the solvent used is preferably 2 mL or more, more preferably 10 mL or more, and preferably 100 mL or less, more preferably 50 mL or less, per 1 g of vulcanized rubber. If the amount of the solvent is 2 mL per 1 g of vulcanized rubber, the decomposition reaction of the vulcanized rubber is promoted, and if the amount of the solvent is 50 mL or less per 1 g of crosslinked rubber, it is preferable from the viewpoint of cost.

The first decomposition step is preferably carried out at 0°C or higher and 200°C or lower. By carrying out the first decomposition step at 0°C or higher, the rate of the decomposition reaction of the vulcanized rubber is improved, and by carrying out the first decomposition step at 200°C or lower, the retention rate (selectivity) of the monomer skeleton in the vulcanized rubber is improved.

The first decomposition step is more preferably carried out at 10°C or higher from the viewpoint of improving the decomposition reaction rate of the vulcanized rubber, and more preferably at 150°C or lower from the viewpoint of improving the selectivity of the product retaining the monomer skeleton.

When a peroxide-type radical initiator is used, the decomposition efficiency is high, so the reaction proceeds at a low temperature of 60°C or lower. Even near room temperature (20°C to 30°C), the reaction proceeds smoothly, so it is also an advantage of using a peroxide-type radical initiator that no special equipment for heating or cooling is required.

The first decomposition step can be carried out at any pressure, including reduced pressure, atmospheric pressure, or increased pressure. Specifically, the reaction pressure is preferably 1 kPa to 10 MPa, more preferably 10 kPa to 1 MPa, and even more preferably 50 kPa to 500 kPa.

In the first decomposition step of the present disclosure, it is important to efficiently stir the raw material vulcanized rubber, radical initiator, and solvent. As the stirring method, various conventionally known methods can be used, such as a method using a magnetic stirrer, a method using a mechanical stirrer, and a method using a shaking stirrer.

Further, in order to promote the reaction, ultrasonic irradiation, microwave irradiation, light irradiation, or the like may also be used. These may also be used in combination.

(Product of First Decomposition Step)

In the decomposition method for vulcanized rubber of the present embodiment, it is preferable that, through the first decomposition step, the vulcanized rubber is decomposed into a soluble polymer having a weight-average molecular weight of 200 to 200,000, and more preferably into a soluble polymer having a weight-average molecular weight of 300 to 150,000.

By decomposing into a soluble polymer having a weight-average molecular weight of 200 to 200,000 by the first decomposition step, the yield of diene monomers and the like in the second decomposition step described later can be further improved.

The weight-average molecular weight (Mw) can be measured, for example, by gel permeation chromatography (hereinafter, sometimes referred to as GPC).

Further, after the first decomposition step, insoluble carbon black is recovered. The recovered carbon black usually contains organic components such as polymers derived from vulcanized rubber. The proportion of organic components in the recovered carbon black is preferably 5 to 35 mass%, and more preferably 7 to 25 mass%.

<Second Decomposition Step>

The decomposition method for vulcanized rubber of the present embodiment includes a second decomposition step of thermally decomposing the soluble polymer obtained in the first decomposition step to convert it into a low molecular weight compound having 10 or fewer carbon atoms.

(Reaction Conditions of Second Decomposition Step)

The thermal decomposition in the second decomposition step is generally carried out at a temperature of 400°C or higher and 900°C or lower.

By performing the thermal decomposition at 400°C or higher, the rate of the decomposition reaction of the soluble polymer obtained in the first decomposition step is improved, and by performing the thermal decomposition at 900°C or lower, undesirable side reactions can be suppressed. From the viewpoint of improving the decomposition reaction rate, it is further preferable that the thermal decomposition is performed at 500°C or higher, and from the viewpoint of suppressing side reactions, it is further preferable that the thermal decomposition is performed at 850°C or lower.

It is preferable that the second decomposition step is performed under an inert gas or water vapor atmosphere. By performing the second decomposition step under an inert gas atmosphere, oxidation of the decomposition products obtained in the first decomposition step can be suppressed. Here, examples of the inert gas include nitrogen, carbon dioxide, argon, helium, and the like.

The second decomposition step can be performed under any of atmospheric pressure, reduced pressure, or increased pressure, but from the viewpoint of promoting the progress of the reaction, it is preferable to perform the step under atmospheric pressure or reduced pressure. When performed under reduced pressure, a pressure of 0.001 to 0.9 atm is preferable, and 0.01 to 0.6 atm is more preferable.

As the reaction apparatus for the second decomposition step, various conventionally known types can be used, but from the viewpoint of the efficiency of thermal decomposition, it is preferable to use a type in which the raw material is introduced into a reaction furnace heated to a high temperature and the raw material is rapidly heated to undergo thermal decomposition.

As an example of such a type of thermal decomposition reaction furnace, for example, a type used in pyrolysis gas chromatography (hereinafter, sometimes referred to as Py-GC) can be mentioned. In this type, since the raw material undergoes instantaneous thermal decomposition at a high temperature, the yield of the target product is improved.

In addition, a fluidized bed reactor type using quartz sand or water vapor as a heat medium is also preferable, since the raw material can be rapidly heated to the thermal decomposition temperature.

On the other hand, if the raw material does not undergo instantaneous thermal decomposition, problems such as insufficient decomposition of the raw material or the raw material being discharged from the reaction system without decomposition may occur, resulting in a decrease in the yield of the target product.

(Catalyst for Second Decomposition Step)

In the second decomposition step, a catalyst may be present. As such a catalyst, any of acidic, neutral, or basic catalysts can be used.

Generally, inorganic solid catalysts can be used as the catalyst, and various inorganic catalysts such as non-porous and porous types can be used.

Examples of non-porous types include metal oxides such as $MgO$, $CaO$, $BaO$, $Y_2O_3$, $La_2O_3$, $CeO_2$, $TiO_2$, $ZrO_2$, $ZnO$, and carbonates such as $Li_2CO_3$, $Na_2CO_3$, $K_2CO_3$, $Rb_2CO_3$, $Cs_2CO_3$.

Examples of porous types include silica, alumina, zeolite, montmorillonite, activated carbon, and the like. In addition, those in which a metal is supported on these materials can also be used.

There are no particular limitations on the types of silica, alumina, zeolite, montmorillonite, or activated carbon, and various commercially available products of acidic, neutral, or basic types can be used. As zeolites, from the viewpoint of activity and the like, USY type, SDUSY type, beta type, ZSM-5, Y type, and the like are preferably used. The silica/alumina ratio of the zeolite is usually 3 to 2000, and preferably 4 to 1000. Zeolites and montmorillonite in the form of proton or ion-exchanged with metal cations such as Na or K are also preferably used. Furthermore, in the case of silica, alumina, or activated carbon, those in which metals such as Ru, Co, Rh, Ir, Ni, Pd, Pt, or Cu are supported are also preferably used.

The yield and distribution of the products can be varied depending on the type of catalyst, but with respect to the yield of isoprene, which is a type of diene monomer, basic or neutral catalysts are preferable, and with respect to the production of hydrocarbons having 4 or fewer carbon atoms, acidic catalysts are preferable.

Two or more types of the above catalysts may be used in combination.

The amount of the catalyst used is preferably 0.01 parts by mass or more, more preferably 0.1 parts by mass or more, and even more preferably 1 part by mass or more, and preferably 80 parts by mass or less, more preferably 40 parts by mass or less, and even more preferably 5 parts by mass or less, per 1 part by mass of the decomposition product obtained in the first decomposition step (or the intermediate product supplied to the second decomposition step).

If the amount of the catalyst used is 1 part by mass or more per 1 part by mass of the decomposition product obtained in the first decomposition step (or the intermediate product supplied to the second decomposition step), the decomposition reaction proceeds more rapidly, and if the amount of the catalyst used is 5 parts by mass or less per 1 part by mass of the decomposition product obtained in the first decomposition step (or the intermediate product supplied to the second decomposition step), it is preferable from the viewpoint of cost.

(Products of Second Decomposition Step)

In the decomposition method for vulcanized rubber of the present embodiment, in the second decomposition step, the soluble polymer obtained in the first decomposition step is decomposed into hydrocarbons having 10 or fewer carbon atoms. By efficiently decomposing to hydrocarbons having 10 or fewer carbon atoms, the yield of reusable monomers and other low molecular weight compounds is improved, and the economic and environmental value of the decomposition method is further enhanced.

With respect to the decomposition rate of the soluble polymer, 20% by mass or more is preferable, and 30% by mass or more is more preferable.

The hydrocarbons having 10 or fewer carbon atoms as the decomposition products vary depending on the type of rubber in the vulcanized rubber to be decomposed, but examples include ethylene, propylene, 1,3-butadiene, isoprene, 1,3-pentadiene, 2,3-dimethyl-1,3-butadiene, benzene, toluene, xylene, ethylbenzene, isopropylbenzene, styrene, limonene, and the like.

<Others>

The decomposition method for vulcanized rubber of the present embodiment may further include another step in addition to the above-described first decomposition step and second decomposition step. Examples of such steps include a pretreatment step for the vulcanized rubber (for example, cutting step, pulverizing step), and the like.

As a pretreatment step in the first decomposition step, a step of washing with a solvent can also be mentioned. By washing with a solvent, additives such as antioxidants remaining in the vulcanized rubber, which are considered to inhibit the decomposition reaction, can be removed, and thus the amount of initiator used can be reduced. The type of solvent used in the pretreatment step is not particularly limited, but a solvent that easily dissolves additives such as antioxidants is preferable, and specific examples include hydrocarbons such as toluene, ketones such as acetone, chlorinated hydrocarbons such as chloroform, and ethers such as tetrahydrofuran.

In addition, the decomposition method for vulcanized rubber of the present embodiment can be carried out in either batch-type or flow-type reactors.

<Separation and Purification of Products>

With respect to the separation and purification of the products after the decomposition reaction, in the first decomposition step, operations such as filtration, centrifugation, reprecipitation, and preparative GPC can be used, and in the second decomposition step, operations such as distillation and recrystallization can be used, and each can be easily performed.

The soluble polymer product obtained in the first decomposition step is used as a raw material in the second decomposition step, and since it maintains the basic skeleton of the vulcanized rubber before decomposition, it can also be reused as a raw material for manufacturing vulcanized rubber. In addition, the hydrocarbon product having 10 or fewer carbon atoms obtained in the second decomposition step can also be reused as a raw material for diene-based rubber.

EXAMPLES

The present disclosure will be further described in detail below with reference to examples, but the present disclosure is not limited in any way to the following examples.

(Analytical Instruments, etc.)

- Gel permeation chromatography (hereinafter, sometimes referred to as GPC): Analytical system LabSolutions manufactured by Shimadzu Corporation (liquid delivery unit: LC-20AB manufactured by Shimadzu Corporation, column: TSKgel SuperHM-H $\times$ 2 columns manufactured by Tosoh Corporation, detector: differential refractometer RID-10A manufactured by Shimadzu Corporation, eluent: tetrahydrofuran, flow rate: 0.6 mL/min, measurement temperature: 40°C, weight-average molecular weight (Mw) and number-average molecular weight (Mn) are based on standard polystyrene)
- Nuclear magnetic resonance analyzer (hereinafter, sometimes referred to as NMR): AVANCE III HD 600 manufactured by Bruker (solvent: $CDCl_3$)
- Pyrolyzer apparatus (hereinafter, sometimes referred to as Py): PY-3030D manufactured by Frontier Laboratories
- Gas chromatograph-mass spectrometer (hereinafter, sometimes referred to as GC/MS): GCMS-QP2010Plus manufactured by Shimadzu Corporation (column: capillary column UltraALLOY UA-1 manufactured by Frontier Laboratories)
- Gas chromatograph analyzer (hereinafter, sometimes referred to as GC): and GC-2014 manufactured by Shimadzu Corporation (column: capillary column UltraALLOY UA-1 manufactured by Frontier Laboratories)

Note that the pyrolyzer apparatus is generally used by being attached to a gas chromatograph-mass spectrometer or a gas chromatograph analyzer (hereinafter, sometimes referred to as Py-GC/MS or Py-GC).

<Preparation of Vulcanized Rubber Samples>

(Vulcanized Rubber A)

A rubber composition was prepared by compounding 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer] to 100 parts by mass of natural rubber, and the rubber composition was heat crosslinked to prepare vulcanized rubber.

(Vulcanized Rubber B)

A rubber composition was prepared by compounding 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer] to 60 parts by mass of natural rubber and 40 parts by mass of butadiene rubber, and the rubber composition was heat crosslinked to prepare vulcanized rubber.

(Vulcanized Rubber C)

A rubber composition was prepared by compounding 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer] to 40 parts by mass of natural rubber and 60 parts by mass of butadiene rubber, and the rubber composition was heat crosslinked to prepare vulcanized rubber.

(Vulcanized Rubber D)

A rubber composition was prepared by compounding 50 parts by mass of carbon black, 2 parts by mass of stearic acid, 2.25 parts by mass of zinc oxide, 1 part by mass of wax, 1 part by mass of antioxidant 6PPD [N-phenyl-N'-(1,3-dimethylbutyl)-p-phenylenediamine], 0.3 parts by mass of vulcanization accelerator DPG [1,3-diphenyl guanidine], 0.5 parts by mass of vulcanization accelerator MBTS [dibenzothiazolyl disulfide], 0.5 parts by mass of vulcanization accelerator TBBS [N-t-butyl-2-benzothiazolesulfenamide], 1.5 parts by mass of sulfur, and 1 part by mass of antioxidant TMDQ [trimethyldihydroquinoline polymer] to 100 parts by mass of styrene-butadiene rubber, and the rubber composition was heat crosslinked to prepare vulcanized rubber.
In the first decomposition step of the vulcanized rubber, the obtained vulcanized rubber was used in a cut form (about 5 mm square), or further cryogenically ground (about 1-2 mm square).

<Examples of First Decomposition Step>

(Calculation of Yield)

The yield of the first decomposition step was calculated as follows: after adding a fixed amount of internal standard substance (hexamethyldisilane) to the reaction solution, a portion of the reaction solution was taken, $^1$H NMR measurement was performed, the weight of the monomer skeleton of the solubilized rubber component was calculated, and the ratio to the weight of the monomer skeleton in the vulcanized rubber before the reaction (calculated from the compounding table of the vulcanized rubber) was calculated according to the following formula.

Yield of the first decomposition step (%) = (weight of the monomer skeleton of the solubilized rubber component after the reaction ÷ weight of the monomer skeleton of the vulcanized rubber component before the reaction) × 100

For example, in the case of natural rubber, in $^1$H NMR (in CDCl$_3$), the proton signal of the internal standard substance hexamethyldisilane and the proton signal of the isoprene skeleton (alkenyl group) of the solubilized rubber component are observed at around 0.04 and 5.13 ppm, respectively. The yield can be calculated from the ratio of the integral value of the isoprene skeleton signal to the integral value of the hexamethyldisilane signal. The polyisoprene content in natural rubber was set at 93%.

The following describes specific examples.

(Example 1)

A mixture of 50 mg of the above vulcanized rubber sample A, 7.4 mg of benzoyl peroxide (hydrated, 75% purity), and 0.8 mL of toluene was placed in a 5 mL Spitz-type vial (sealed), and stirred with a magnetic stirrer using a Teflon® (Teflon is a registered trademark in Japan, other countries, or both) rotor at 25°C (room temperature) for 1 day under an air atmosphere to carry out the decomposition reaction. As a result of calculating the yield of the soluble polymer generated by the decomposition of the vulcanized rubber by $^1$H NMR measurement of the reaction solution, the yield was calculated to be 89%. In addition, by GPC measurement of the reaction solution, the molecular weight was estimated to be Mw = 41,400, Mn = 16,900, Mw/Mn = 2.4 (see Table 1).

(Examples 2-57)

The results of decomposition reactions and product analyses performed in the same manner as in Example 1, except that the reaction conditions (type of vulcanized rubber, type of radical initiator, type of solvent, reaction temperature, type of vessel, etc.) were changed, are presented in Tables 1 to 3.

[Table 1]

| Example [1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 1 | A [50] | BPO [7.4] | PhMe [0.8] | 25 | 1d | 89 | 41400 | 16900 | 2.4 |
| Example 2 | A [50] | BPO [7.4] | Xy [0.8] | 25 | 1d | 86 | 37300 | 15800 | 2.4 |
| Example 3 | A [50] | BPO [7.4] | CyHex [0.8] | 25 | 1d | 75 | 41700 | 18100 | 2.3 |
| Example 4 | A [50] | BPO [7.4] | $CHCl_3$ [0.8] | 25 | 1d | 86 | 40000 | 15600 | 2.6 |
| Example 5 | A [50] | BPO [7.4] | $CHCl_2CH_2Cl$ [0.8] | 25 | 1d | 88 | 41900 | 16200 | 2.6 |
| Example 6 | A [50] | BPO [7.4] | $Cl_2C{=}CCl_2$ [0.8] | 25 | 1d | 86 | 47600 | 19100 | 2.5 |
| Example 7 | A [50] | BPO [7.4] | DCB [0.8] | 25 | 1d | 88 | 46500 | 17700 | 2.6 |
| Example 8 | A [50] | BPO [7.4] | PhCl [0.8] | 25 | 1d | 84 | 39800 | 15900 | 2.5 |
| Example 9 | A [50] | BPO [7.4] | PhCN [0.8] | 25 | 1d | 87 | 31100 | 12500 | 2.5 |
| Example 10 | A [50] | BPO [7.4] | PhOMe [0.8] | 25 | 1d | 87 | 39900 | 15500 | 2.6 |
| Example 11 | A [50] | BPO [7.4] | $^t$BuOMe [0.8] | 25 | 1d | 79 | 37700 | 15500 | 2.4 |
| Example 12 | A [50] | BPO [7.4] | PhMe [0.8] | 60 | 3h | 81 | 47200 | 19200 | 2.5 |
| Example 13 | A [50] | BPO [7.4] | PhEt [0.8] | 60 | 3h | 86 | 26000 | 11900 | 2.2 |
| Example 14 | A [50] | BPO [7.4] | $CHCl_3$ [0.8] | 60 | 2h | 93 | 37200 | 15300 | 2.4 |
| Example 15 | A [50] | BPO [7.4] | $CHCl_2CH_2Cl$ [0.8] | 60 | 2h | 89 | 36900 | 14100 | 2.6 |
| Example 16 | A [50] | BPO [7.4] | PhCl [0.8] | 60 | 2h | 83 | 53800 | 20900 | 2.6 |
| Example 17 | A [50] | BPO [7.4] | PhCl [0.8] | 90 | 2h | 70 | 51400 | 18100 | 2.8 |
| Example 18 | A [50] | BPO [7.4] | DCB [0.8] | 130 | 20m | 58 | 75800 | 27000 | 2.8 |

(continued)

| Example [1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 19 | A [50] | BPO [7.4] | PhOMe [0.8] | 130 | 20m | 59 | 58500 | 19900 | 2.9 |
| Example 20 | A [50] | BPO [7.4] | PhCl [0.8] | 130 | 20m | 67 | 68100 | 22300 | 3.1 |

[Table 2]

| Example [1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 21 | A [50] | BPO [7.4] | PhCN [0.8] | 130 | 20m | 57 | 34900 | 14000 | 2.5 |
| Example 22 | A [50] | LPO [9.2] | PhMe [0.8] | 25 | 1d | 83 | 31900 | 13600 | 2.4 |
| Example 23 | A [50] | LPO [9.2] | PhCl [0.8] | 25 | 1d | 84 | 33600 | 14100 | 2.4 |
| Example 24 | A [100] | BPO [14.8] | $CHCl_3$ [2] | 30 | 1d | 86 | 42200 | 16500 | 2.6 |
| Example 25 | A [100] | BPO [14.8] | PhCl [2] | 30 | 1d | 86 | 50700 | 19700 | 2.6 |
| Example 26 | A [100] | BPO [14.8] | THF [1.6] | 30 | 1d | 79 | 73700 | 27000 | 2.7 |
| Example 27 | A [100] | BPO [14.8] | PhMe [1.6] | 40 | 1d | 90 | 51600 | 19900 | 2.6 |
| Example 28 | A [100] | BPO [14.8] | $CHCl_3$ [1.6] | 40 | 1d | 92 | 50700 | 19600 | 2.6 |
| Example 29 | A [100] | BPO [14.8] | PhMe [1.6] | 40 | 6h | 86 | 39000 | 15900 | 2.5 |
| Comparative Example 1[7] | A [100] | BPO [14.8] | PhMe [1.6] | 40 | 6h | 3 | - | - | - |
| Example 30 | A [100] | BPO [14.8] | PhMe [2] | 40 | 1d | 85 | 46600 | 18900 | 2.5 |
| Example 31 | A [100] | BPO [14.8] | $CHCl_3$ [1.6] | 30 | 1d | 87 | 33500 | 14200 | 2.4 |
| Example 32 | A [100] | LPO [18.4] | $CHCl_3$ [1.6] | 30 | 1d | 86 | 34100 | 14600 | 2.3 |
| Example 33 | A [100] | APO [5.4] | $CHCl_3$ [1.6] | 30 | 1d | 91 | 50300 | 17900 | 2.8 |
| Example 34 | A [50] | AIBN [4.0] | PhCl [0.8] | 120 | lh | 94 | 52600 | 11500 | 4.6 |
| Example 35 | A [50] | AIBN [4.0] | DCB [0.8] | 150 | 20m | 95 | 152400 | 49600 | 3.1 |
| Comparative Example 2[7] | A [50] | AIBN [4.0] | DCB [0.8] | 150 | 20m | 9 | - | - | - |
| Example 36 | A [50] | AIBN [4.0] | DCB [0.8] | 150 | 20m | 54 | 126200 | 44500 | 2.8 |

(continued)

| Example [1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 37 | A [50] | AIBN [4.0] | PhOMe [0.8] | 150 | 20m | 51 | 139400 | 44500 | 3.1 |
| Example 38 | B [50] | BPO [7.4] | PhCl [0.8] | 25 | 1d | 84 (60:40) | 44400 | 18300 | 2.4 |

[Table 3]

| Example [1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 39 | B [100] | BPO [14.8] | $CHCl_3$ [1.6] | 30 | 1d | 86 (59:41) | 48000 | 18800 | 2.6 |
| Example 40 | B [100] | BPO [14.8] | $CHCl_3$ [1.6] | 40 | 1d | 92 (59:41) | 44500 | 17700 | 2.5 |
| Example 41 | C [50] | BPO [7.4] | PhCl [0.8] | 25 | 1d | 74 (41:59) | 46400 | 18500 | 2.5 |
| Example 42 | C [100] | BPO [14.8] | $CHCl_3$ [1.6] | 30 | 1d | 85 (38:62) | 49800 | 19400 | 2.6 |
| Example 43 | C [100] | BPO [14.8] | $CHCl_3$ [1.6] | 40 | 1d | 89 (39:61) | 50400 | 19100 | 2.6 |
| Example 44 | D [100] | BPO [14.8] | $CHCl_3$ [3.2] | 30 | 1d | 77 | 52700 | 20900 | 2.5 |
| Example 45 | D [100] | BPO [14.8] | $CDCl_3$ [3.2] | 30 | 2d | 90 | 45500 | 17900 | 2.5 |
| Example 46 | D [100] | BPO [14.8] | $CHCl_3$ [1.6] | 30 | 3d | 57 | 47400 | 21100 | 2.2 |
| Example 47 | D [100] | BPO [14.8] | PhMe [3.2] | 30 | 4d | 30 | 44000 | 20000 | 2.2 |
| Example 48 | A [500] | BPO [74] | PhMe [8] | 60 | 3h | 84 | 53500 | 22000 | 2.4 |
| Example 49 | A [500] | BPO [74] | PhEt [8] | 60 | 3h | 87 | 47100 | 19600 | 2.4 |
| Example 50 | A [1000] | BPO [147] | PhMe [16] | 25 | 1d | 76 | 49600 | 16600 | 3 |
| Example 51 | A [1000] | BPO [147] | PhMe [16] | 25 | 2d | 76 | 43900 | 15200 | 2.9 |
| Example 52 | A [1000] | BPO [147] | $CHCl_3$ [16] | 25 | 1d | 76 | 44000 | 14700 | 3.0 |
| Example 53 | A [1000] | BPO [147] | $CHCl_3$ [16] | 25 | 2d | 76 | 29600 | 11300 | 2.6 |
| Example 54 | A [1000] | LPO [147] | PhMe [16] | 25 | 1d | 77 | 51300 | 17500 | 2.9 |
| Example 55 | A [1000] | LPO [147] | PhMe [16] | 25 | 2d | 81 | 38000 | 13500 | 2.8 |

(continued)

| Example [1] | Vulcanized rubber [mg] | Radical initiator [2] [mg] | Solvent [3] [mL] | Temperature [4] (°C) | Time [5] | Yield [6] (%) | Molecular weight | | |
|---|---|---|---|---|---|---|---|---|---|
| | | | | | | | Mw | Mn | Mw/Mn |
| Example 56 | A [1000] | LPO [147] | $CHCl_3$ [16] | 25 | 1d | 79 | 50900 | 17200 | 3.0 |
| Example 57 | A [1000] | LPO [147] | $CHCl_3$ [16] | 25 | 2d | 82 | 36700 | 13400 | 2.7 |

(Notes for Tables 1-3)

1) The types of reaction vessels used are as follows (all reactions were performed under sealed conditions).

Examples 1-23, 34-38, 41, Comparative Example 2: 5 mL Spitz-type vial
Examples 24-33, 39, 40, 42-47, Comparative Example 1: 10 mL round-bottom vial
Examples 48, 49: 20 mL round-bottom vial
Examples 50-57: 150 mL flat-bottom vial

2) The radical initiators used are as follows.

BPO: benzoyl peroxide
LPO: lauroyl peroxide
APO: acetyl peroxide
AIBN: azobisisobutyronitrile

3) The solvents used are as follows.
PhMe: toluene, Xy: xylene, CyHex: cyclohexane, $CHCl_3$: chloroform, $CHCl_2CH_2Cl$: 1,1,2-trichloroethane, $Cl_2C=CCl_2$: tetrachloroethylene, DCB: o-dichlorobenzene, PhCl: chlorobenzene, PhCN: benzonitrile, PhOMe: anisole, $^tBuOMe$: tert-butyl methyl ether, PhEt: ethylbenzene, THF: tetrahydrofuran, $CDCl_3$: deuterated chloroform
4) For temperature, 25°C indicates decomposition at room temperature, 30°C and 40°C indicate decomposition in a thermostatic oven, and 60°C indicates decomposition in an oil bath or water bath. 90°C, 120°C, 130°C, and 150°C indicate heating by oil bath (Examples 17, 19-21, 34, 36, 37) or by microwave irradiation apparatus (Examples 18, 35, Comparative Example 2).
5) For time, m indicates minutes, h indicates hours, and d indicates days.
6) The numbers in parentheses for the yields in the decomposition reactions of vulcanized rubbers B and C indicate the ratio of the yields of the isoprene skeleton to the butadiene skeleton.
7) Comparative Examples 1 and 2 are examples of reactions performed under a nitrogen atmosphere using deoxygenated solvent.

The results in Tables 1 to 3 indicate that compounded vulcanized rubbers containing natural rubber, butadiene rubber, and/or styrene-butadiene rubber and carbon black are decomposed by a radical initiator such as an acyl peroxide under an air atmosphere in various solvents to give a soluble polymer. In particular, when an acyl peroxide is used, the decomposition reaction proceeds smoothly even at room temperature.
In addition, regarding the type of rubber, compared to natural rubber and butadiene rubber, styrene-butadiene rubber exhibits a greater solvent effect, and by using a chlorinated hydrocarbon as the solvent, the decomposition reaction proceeds efficiently. For example, in the above vulcanized rubber D containing styrene-butadiene rubber, the yield was 30% under the reaction conditions of 30°C for 4 days in toluene solvent (Example 47), but a high yield of 77% was obtained under the reaction conditions of 30°C for 1 day in chloroform solvent (Example 44).
In these decomposition reactions, as indicated in the following comparative examples, the presence of oxygen is important.

(Comparative Example 1)

In the reaction of Example 29 (vulcanized rubber A, benzoyl peroxide initiator, toluene solvent, 40°C, 6 hours), when the reaction was performed under a nitrogen atmosphere using deoxygenated solvent, the yield of the soluble polymer decreased from 83% to 3%.

(Comparative Example 2)

In the reaction of Example 35 (vulcanized rubber A, azobisisobutyronitrile initiator, o-dichlorobenzene solvent, 150°C, 20 minutes), when the reaction was performed under a nitrogen atmosphere using deoxygenated solvent, the yield of the soluble polymer decreased from 95% to 9%.

The results of Comparative Examples 1 and 2 indicate that the decomposition reaction proceeds under an air atmosphere, but hardly proceeds under a nitrogen atmosphere. It is considered that the presence of oxygen in the air is extremely important for the progress of the decomposition reaction.

In the decomposition of compounded rubber containing carbon black, the carbon black can be separated by filtration, centrifugation, or the like to obtain a soluble polymer. Specific examples are presented below.

(Example 58)

A mixture of 50 mg of the above vulcanized rubber sample A, 7.4 mg of benzoyl peroxide (hydrated product, 75% purity), and 0.8 mL of chlorobenzene was placed in a 20 mL round-bottom vial (sealed), and under an air atmosphere at 25°C, stirred for 1 day using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 94%. Further, based on GPC measurement, the molecular weight was estimated to be Mw = 42,900, Mn = 17,000, and Mw/Mn = 2.5.

Chlorobenzene was added to the reaction solution, and the insoluble solid was removed by filtration, followed by washing the insoluble solid with toluene. The insoluble solid was vacuum-dried by heating to recover the carbon black component (20 mg). On the other hand, the filtrate and the washing solution were combined and concentrated under reduced pressure, resulting in the obtainment of a soluble polymer composition (P1) having an isoprene skeleton (30 mg). A portion thereof was taken, and after adding an internal standard substance (hexamethyldisilane), $^1$H NMR measurement was performed, and as a result, the proportion of the isoprene skeleton in the soluble polymer composition (P1) was calculated to be 65%. Further, based on GPC measurement, the molecular weight was estimated to be Mw = 45,200, Mn = 18,300, and Mw/Mn = 2.5.

(Example 59)

A mixture of 150 mg of the above vulcanized rubber sample A, 23 mg of benzoyl peroxide (hydrated product, 75% purity), and 2.4 mL of chlorobenzene was placed in a 100 mL recovery flask (sealed), and under an air atmosphere at 25°C, stirred for 2 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 94%. Further, based on GPC measurement, the molecular weight was estimated to be Mw = 37,800, Mn = 14,800, and Mw/Mn = 2.6.

Chlorobenzene was added to the reaction solution, and the insoluble solid was removed by filtration, followed by washing the insoluble solid with toluene. The insoluble solid was vacuum-dried by heating to recover the carbon black component (40 mg). On the other hand, the filtrate and the washing solution were combined and concentrated under reduced pressure, resulting in the obtainment of a soluble polymer composition having an isoprene skeleton (100 mg). A portion thereof was taken, and after adding an internal standard substance (hexamethyldisilane), $^1$H NMR measurement was performed, and as a result, the proportion of the isoprene skeleton in the soluble polymer composition was calculated to be 62%. Further, based on GPC measurement, the molecular weight was estimated to be Mw = 41,800, Mn = 15,600, and Mw/Mn = 2.7.

Furthermore, in order to purify the soluble polymer composition, a portion of the obtained soluble polymer composition was dissolved in tetrahydrofuran and dropped into methanol. The precipitated liquid polymer was separated, washed with methanol, and dried under reduced pressure, resulting in the obtainment of a purified soluble polymer composition (P2) (65 mg). A portion thereof was taken, and after adding an internal standard substance (hexamethyldisilane), $^1$H NMR measurement was performed, and as a result, the proportion of the isoprene skeleton in the purified soluble polymer composition (P2) was calculated to be 81%. Further, based on GPC measurement, the molecular weight was estimated to be Mw = 45,800, Mn = 16,100, and Mw/Mn = 2.5.

(Example 60)

A mixture of 200 mg of the above vulcanized rubber sample A, 30 mg of benzoyl peroxide (hydrated product, 75% purity), and 3.2 mL of chloroform was placed in a 20 mL round-bottom vial (sealed), and under an air atmosphere at 25°C, stirred for 2 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 89%. Further, based on GPC measurement, the molecular weight was estimated to be Mw = 38,300, Mn = 15,300, and Mw/Mn = 2.5.

The reaction solution was concentrated under reduced pressure, diluted with tetrahydrofuran, and the insoluble solid was separated by centrifugation. Tetrahydrofuran was added to the separated insoluble solid, mixed, and further centrifuged to recover the insoluble carbon black component (70 mg). On the other hand, the supernatant after centrifugation was combined and concentrated under reduced pressure, resulting in the obtainment of a soluble polymer composition having an isoprene skeleton (147 mg). A portion thereof was taken, and after adding an internal standard substance (hexamethyldisilane), $^1$H NMR measurement was performed, and as a result, the proportion of the isoprene skeleton in the soluble polymer composition was calculated to be 69%. Further, based on GPC measurement, the molecular weight was estimated to be Mw = 43,700, Mn = 16,300, and Mw/Mn = 2.7.

(Example 61)

A mixture of 200 mg of the above vulcanized rubber sample A, 30 mg of benzoyl peroxide (hydrated product, 75% purity), and 3.2 mL of chloroform was placed in a 20 mL round-bottom vial (sealed), and under an air atmosphere at 60°C, stirred for 5 hours using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 87%. Further, based on GPC measurement, the molecular weight was estimated to be Mw = 31,900, Mn = 13,400, and Mw/Mn = 2.4.

The reaction solution was concentrated under reduced pressure, diluted with tetrahydrofuran, and the insoluble solid was separated by centrifugation. Tetrahydrofuran was added to the separated insoluble solid, mixed, and further centrifuged to recover the insoluble carbon black component (67 mg). On the other hand, the supernatant after centrifugation was combined and concentrated under reduced pressure, resulting in the obtainment of a soluble polymer composition having an isoprene skeleton (148 mg). A portion thereof was taken, and after adding an internal standard substance (hexamethyldisilane), $^1$H NMR measurement was performed, and as a result, the proportion of the isoprene skeleton in the soluble polymer composition was calculated to be 68%. Further, based on GPC measurement, the molecular weight was estimated to be Mw = 35,200, Mn = 14,800, and Mw/Mn = 2.4.

(Example 62)

A mixture of 200 mg of the above vulcanized rubber sample A, 37 mg of lauroyl peroxide, and 3.2 mL of chloroform was placed in a 20 mL round-bottom vial (sealed), and under an air atmosphere at 25°C, stirred for 2 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 80%. Further, based on GPC measurement, the molecular weight was estimated to be Mw = 39,700, Mn = 16,000, and Mw/Mn = 2.5.

The reaction solution was concentrated under reduced pressure, diluted with tetrahydrofuran, and the insoluble solid was separated by centrifugation. Tetrahydrofuran was added to the separated insoluble solid, mixed, and further centrifuged. The insoluble solid was vacuum-dried by heating to recover the insoluble carbon black component (74 mg). On the other hand, the supernatant after centrifugation was combined and concentrated under reduced pressure, resulting in the obtainment of a soluble polymer composition having an isoprene skeleton (162 mg). A portion thereof was taken, and after adding an internal standard substance (hexamethyldisilane), $^1$H NMR measurement was performed, and as a result, the proportion of the isoprene skeleton in the soluble polymer composition was calculated to be 61%. Further, based on GPC measurement, the molecular weight was estimated to be Mw = 44,400, Mn = 17,000, and Mw/Mn = 2.6.

(Example 63)

A mixture of 200 mg of the above vulcanized rubber sample A, 37 mg of lauroyl peroxide, and 3.2 mL of chloroform was placed in a 20 mL round-bottom vial (sealed), and under an air atmosphere at 60°C, stirred for 5 hours using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 87%. Further, based on GPC measurement, the molecular weight was estimated to be Mw = 31,900, Mn = 13,400, and Mw/Mn = 2.4.

The reaction solution was concentrated under reduced pressure, diluted with tetrahydrofuran, and the insoluble solid was separated by centrifugation. Toluene was added to the separated insoluble solid, mixed, and further centrifuged.

The insoluble solid was vacuum-dried by heating to recover the insoluble carbon black component (76 mg). On the other hand, the supernatant after centrifugation was combined and concentrated under reduced pressure, resulting in the obtainment of a soluble polymer composition having an isoprene skeleton (159 mg). A portion thereof was taken, and after adding an internal standard substance (hexamethyldisilane), $^1$H NMR measurement was performed, and as a result, the proportion of the isoprene skeleton in the soluble polymer composition was calculated to be 61%. Further, based on GPC measurement, the molecular weight was estimated to be Mw = 27,600, Mn = 12,900, and Mw/Mn = 2.1.

(Example 64)

A mixture of 1,000 mg of the above vulcanized rubber sample A, 147 mg of benzoyl peroxide (hydrated product, 75% purity), and 16 mL of toluene was placed in a 150 mL flat-bottom vial (sealed), and under an air atmosphere at 25°C, stirred for 5 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 80%. Further, based on GPC measurement, the molecular weight was estimated to be Mw = 42,400, Mn = 14,900, and Mw/Mn = 2.8.

The reaction solution was diluted with toluene, and the insoluble solid was separated by centrifugation. Toluene was added to the separated insoluble solid, mixed, and further centrifuged. The insoluble solid was vacuum-dried by heating to recover the insoluble carbon black component (368 mg). On the other hand, the supernatant after centrifugation was combined and concentrated under reduced pressure, resulting in the obtainment of a soluble polymer composition having an isoprene skeleton (731 mg). A portion thereof was taken, and after adding an internal standard substance (hexamethyldisilane), $^1$H NMR measurement was performed, and as a result, the proportion of the isoprene skeleton in the soluble polymer composition was calculated to be 64%. Further, based on GPC measurement, the molecular weight was estimated to be Mw = 47,000, Mn = 15,600, and Mw/Mn = 3.0.

(Example 65)

A mixture of 1,000 mg of the above vulcanized rubber sample A, 147 mg of benzoyl peroxide (hydrated product, 75% purity), and 16 mL of chloroform was placed in a 150 mL flat-bottom vial (sealed), and under an air atmosphere at 25°C, stirred for 5 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 85%. Further, based on GPC measurement, the molecular weight was estimated to be Mw = 25,400, Mn = 10,300, and Mw/Mn = 2.5.

The reaction solution was diluted with toluene, and the insoluble solid was separated by centrifugation. Toluene was added to the separated insoluble solid, mixed, and further centrifuged. The insoluble solid was vacuum-dried by heating to recover the insoluble carbon black component (351 mg). On the other hand, the supernatant after centrifugation was combined and concentrated under reduced pressure, resulting in the obtainment of a soluble polymer composition having an isoprene skeleton (731 mg). A portion thereof was taken, and after adding an internal standard substance (hexamethyldisilane), $^1$H NMR measurement was performed, and as a result, the proportion of the isoprene skeleton in the soluble polymer composition was calculated to be 61%. Further, based on GPC measurement, the molecular weight was estimated to be Mw = 28,900, Mn = 10,700, and Mw/Mn = 2.7.

(Example 66)

A mixture of 1,000 mg of the above vulcanized rubber sample A, 183 mg of lauroyl peroxide, and 16 mL of toluene was placed in a 150 mL flat-bottom vial (sealed), and under an air atmosphere at 25°C, stirred for 5 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 85%. Further, based on GPC measurement, the molecular weight was estimated to be Mw = 27,100, Mn = 10,900, and Mw/Mn = 2.5.

The reaction solution was diluted with toluene, and the insoluble solid was separated by centrifugation. Toluene was added to the separated insoluble solid, mixed, and further centrifuged. The insoluble solid was vacuum-dried by heating to recover the insoluble carbon black component (392 mg). On the other hand, the supernatant after centrifugation was combined and concentrated under reduced pressure, resulting in the obtainment of a soluble polymer composition having an isoprene skeleton (782 mg). A portion thereof was taken, and after adding an internal standard substance (hexamethyldisilane), $^1$H NMR measurement was performed, and as a result, the proportion of the isoprene skeleton in the soluble polymer composition was calculated to be 58%. Further, based on GPC measurement, the molecular weight was estimated to be Mw = 30,100, Mn = 11,100, and Mw/Mn = 2.7.

(Example 67)

A mixture of 1,000 mg of the above vulcanized rubber sample A, 183 mg of lauroyl peroxide, and 16 mL of chloroform was placed in a 150 mL flat-bottom vial (sealed), and under an air atmosphere at 25°C, stirred for 5 days using a Teflon® stir bar with a magnetic stirrer to carry out the decomposition reaction. As a result of calculating the yield of the soluble polymer produced by the decomposition of the vulcanized rubber based on $^1$H NMR measurement of the reaction solution, the yield was calculated to be 85%. Further, based on GPC measurement, the molecular weight was estimated to be Mw = 23,200, Mn = 9,800, and Mw/Mn = 2.4.

The reaction solution was diluted with toluene, and the insoluble solid was separated by centrifugation. Toluene was added to the separated insoluble solid, mixed, and further centrifuged. The insoluble solid was vacuum-dried by heating to recover the insoluble carbon black component (381 mg). Furthermore, the supernatant after centrifugation was combined and concentrated under reduced pressure, resulting in the obtainment of a soluble polymer composition having an isoprene skeleton (798 mg). A portion thereof was taken, and after adding an internal standard substance (hexam-ethyldisilane), $^1$H NMR measurement was performed, and as a result, the proportion of the isoprene skeleton in the soluble polymer composition was calculated to be 60%. Further, based on GPC measurement, the molecular weight was estimated to be Mw = 27,200, Mn = 10,500, and Mw/Mn = 2.6.

(Example 68)

A mixture of 6,000 mg of the above vulcanized rubber sample A, 886 mg of benzoyl peroxide (hydrated product, 75% purity), and 100 mL of toluene was placed in a 1,000 mL flat-bottom vial (unsealed) equipped with a PTFE membrane having a pore size of 0.2 $\mu$m, and under an air atmosphere at 25°C, stirred for 4 days using a Teflon® stir bar with a magnetic stirrer to carry out the decomposition reaction. As a result of $^1$H NMR measurement of the reaction solution, the yield of the soluble polymer produced by the decomposition of the vulcanized rubber was calculated to be 80%. Further, based on GPC measurement, the molecular weight was estimated to be Mw = 45,800, Mn = 14,800, and Mw/Mn = 3.1.

The reaction solution was diluted with tetrahydrofuran, and the insoluble solid was separated by centrifugation, then vacuum-dried by heating to recover the insoluble carbon black component (2,257 mg). On the other hand, the supernatant was concentrated under reduced pressure, resulting in the obtainment of a soluble polymer composition having an isoprene skeleton (4,460 mg). After adding an internal standard substance (hexamethyldisilane), $^1$H NMR measurement was performed, and as a result, the proportion of the isoprene skeleton in the soluble polymer composition was calculated to be 66%. Further, based on GPC measurement, the molecular weight was estimated to be Mw = 51,100, Mn = 16,700, and Mw/Mn = 3.1.

(Example 69)

A mixture of 6,000 mg of the above vulcanized rubber sample A, 886 mg of benzoyl peroxide (hydrated product, 75% purity), and 110 mL of toluene was placed in a 1,000 mL flat-bottom vial (unsealed) equipped with a PTFE membrane having a pore size of 0.45 $\mu$m, and under an air atmosphere at 25°C, stirred for 4 days using a Teflon® stir bar with a magnetic stirrer to carry out the decomposition reaction. As a result of $^1$H NMR measurement of the reaction solution, the yield of the soluble polymer composition produced by the decomposition of the vulcanized rubber was calculated to be 80%. Further, based on GPC measurement, the molecular weight was estimated to be Mw = 50,400, Mn = 15,900, and Mw/Mn = 3.2.

The reaction solution was diluted with toluene, and the insoluble solid was separated by centrifugation, then vacuum-dried by heating to recover the insoluble carbon black component (2,304 mg). On the other hand, the supernatant was concentrated under reduced pressure, resulting in the obtainment of a soluble polymer composition having an isoprene skeleton (4,351 mg). After adding an internal standard substance (hexamethyldisilane), $^1$H NMR measurement was performed, and as a result, the proportion of the isoprene skeleton in the soluble polymer composition was calculated to be 66%. Further, based on GPC measurement, the molecular weight was estimated to be Mw = 51,400, Mn = 16,200, and Mw/Mn = 3.2.

The soluble polymer obtained by the first decomposition step of the present disclosure basically retains the polymer skeleton of the raw material vulcanized rubber. For example, in the decomposition of vulcanized rubber sample A, cis-type polyisoprene can be selectively obtained.

For example, the NMR data of the purified soluble polymer composition (P2) obtained in the decomposition reaction of vulcanized rubber sample A in Example 59 were as follows.

$^1$H NMR (CDCl$_3$): $\delta$ (ppm) 1.68 (s, 3H, CH$_3$), 2.00-2.09 (m, 4H, CH$_2$), 5.12 (t, J = 6.2 Hz, 1H, =CH)
$^{13}$C NMR (CDCl$_3$): $\delta$ (ppm) 23.5, 26.4, 32.2, 125.0, 135.2

The observed $^1$H and $^{13}$C NMR data indicate that the obtained soluble polymer has a cis-type polyisoprene skeleton and retains the basic skeleton of the polymer component in the vulcanized rubber.

<Examples of Second Decomposition Step>

(Example 70)

A soluble polymer composition obtained in the first decomposition step (the soluble polymer composition (P1) obtained in Example 58) was dissolved in toluene to prepare a solution with a concentration of 5 mg/mL. A portion (5.0 μL) of this solution was collected in a stainless steel vessel, and the solvent was removed by distillation. The resulting 25 μg of the soluble polymer composition after the first decomposition step, obtained after solvent removal, was heated to 650°C using a pyrolyzer, and the resulting pyrolysis products were analyzed by GC/MS and GC (Py-GC/MS and Py-GC). As a result, it was confirmed that isoprene, limonene, hydrocarbons with 1 to 4 carbon atoms, and hydrocarbons with 5 to 10 carbon atoms (excluding isoprene and limonene) were generated at yields of 27%, 6%, 5%, and 25%, respectively (see Table 4).

(Examples 71-73)

The results of performing the decomposition reaction and product analysis in the same manner as in Example 70, except that the reaction conditions (reaction temperature) were changed, are presented in Table 4.

(Example 74)

A soluble polymer composition obtained in the first decomposition step and purified by reprecipitation (the purified soluble polymer composition (P2) of Example 59) was dissolved in toluene to prepare a solution with a concentration of 5 mg/mL. A portion (5.0 μL) of this solution was collected in a stainless steel vessel, and the solvent was removed by distillation. The resulting 25 μg of the purified soluble polymer composition after the first decomposition step, obtained after solvent removal, was heated to 650°C using a pyrolyzer, and the resulting pyrolysis products were analyzed by GC/MS and GC. As a result, it was confirmed that isoprene, limonene, hydrocarbons with 1 to 4 carbon atoms, and hydrocarbons with 5 to 10 carbon atoms (excluding isoprene and limonene) were generated at yields of 31%, 7%, 6%, and 29%, respectively (see Table 4).

(Examples 75-77)

The results of performing the decomposition reaction and product analysis in the same manner as in Example 74, except that the reaction conditions (reaction temperature) were changed, are presented in Table 4.

(Example 78)

A soluble polymer composition obtained in the first decomposition step and purified by reprecipitation (the purified soluble polymer composition (P2) of Example 59) was dissolved in toluene to prepare a solution with a concentration of 5 mg/mL. After impregnating 1 mg of MgO catalyst placed in a stainless steel vessel with a portion (5.0 μL) of this solution, the solvent was removed under reduced pressure. The resulting MgO, to which 25 μg of the purified soluble polymer composition after the first decomposition step adhered after solvent removal, was heated to 750°C using a pyrolyzer, and the resulting pyrolysis products were analyzed by GC/MS and GC. As a result, it was confirmed that isoprene, limonene, hydrocarbons with 1 to 4 carbon atoms, and hydrocarbons with 5 to 10 carbon atoms (excluding isoprene and limonene) were generated at yields of 38%, 0%, 15%, and 38%, respectively (see Table 4).

(Examples 79-99)

The results of performing the decomposition reaction and product analysis in the same manner as in Example 78, except that the type of catalyst was changed, are presented in Table 4.

[Table 4]

| Example [1] | Soluble polymer [2] | Catalyst [3] | Temperature (°C) | Yield [4] (%) | | | |
|---|---|---|---|---|---|---|---|
| | | | | Isoprene | Limonene | C1-C4 [5] | C5-C10 [6] |
| Example 70 | (P1) | - | 650 | 27 | 6 | 5 | 25 |
| Example 71 | (P1) | - | 700 | 31 | 3 | 9 | 30 |
| Example 72 | (P1) | - | 750 | 32 | 0 | 13 | 32 |
| Example 73 | (P1) | - | 850 | 26 | 0 | 32 | 31 |
| Example 74 | (P2) | - | 650 | 31 | 7 | 6 | 29 |
| Example 75 | (P2) | - | 700 | 37 | 3 | 10 | 34 |
| Example 76 | (P2) | - | 750 | 38 | 0 | 14 | 36 |
| Example 77 | (P2) | - | 850 | 30 | 0 | 25 | 30 |
| Example 78 | (P2) | MgO | 750 | 38 | 0 | 15 | 38 |
| Example 79 | (P2) | CaO | 750 | 33 | 0 | 14 | 33 |
| Example 80 | (P2) | $TiO_2$ | 750 | 19 | 0 | 15 | 32 |
| Example 81 | (P2) | $ZrO_2$ | 750 | 27 | 0 | 15 | 36 |
| Example 82 | (P2) | $La_2O_3$ | 750 | 30 | 0 | 13 | 36 |
| Example 83 | (P2) | $CeO_2$ | 750 | 30 | 0 | 16 | 37 |
| Example 84 | (P2) | ZnO | 750 | 32 | 0 | 13 | 34 |
| Example 85 | (P2) | $Na_2CO_3$ | 750 | 37 | 0 | 14 | 35 |
| Example 86 | (P2) | $K_2CO_3$ | 750 | 39 | 0 | 14 | 35 |
| Example 87 | (P2) | CP811E-75 | 750 | 19 | 0 | 29 | 36 |
| Example 88 | (P2) | CBV780 | 750 | 17 | 0 | 27 | 37 |
| Example 89 | (P2) | CBV8020 | 750 | 22 | 0 | 29 | 40 |
| Example 90 | (P2) | CBV8011G | 750 | 38 | 0 | 14 | 38 |
| Example 91 | (P2) | CBV28011G | 750 | 38 | 0 | 16 | 39 |

(continued)

| Example [1] | Soluble polymer[2] | Catalyst[3] | Temperature (°C) | Yield[4] (%) | | | |
|---|---|---|---|---|---|---|---|
| | | | | Isoprene | Limonene | C1-C4[5] | C5-C10[6] |
| Example 92 | (P2) | CBV100 | 750 | 28 | 0 | 19 | 41 |
| Example 93 | (P2) | HSZ-320NAA | 750 | 28 | 0 | 19 | 40 |
| Example 94 | (P2) | Activated carbon (032-18091) | 750 | 23 | 0 | 12 | 24 |
| Example 95 | (P2) | Activated carbon (035-18101) | 750 | 23 | 0 | 13 | 29 |
| Example 96 | (P2) | Pd/C (Pd 5wt%) | 750 | 19 | 0 | 9 | 20 |
| Example 97 | (P2) | Silica gel (37559-79) | 750 | 33 | 0 | 16 | 40 |
| Example 98 | (P2) | Activated alumina (019-08295) | 750 | 32 | 0 | 15 | 38 |
| Example 99 | (P2) | Montmorillonite K10 (281522) | 750 | 18 | 0 | 16 | 28 |

(Notes for Table 4)

1) In Examples 78-86, the solution of the purified soluble polymer composition obtained in the first decomposition step was impregnated into the catalyst placed in a stainless steel vessel, the solvent was removed under reduced pressure, and pyrolysis was performed.
On the other hand, in Examples 87-99, the solution of the purified soluble polymer composition obtained in the first decomposition step was placed in a stainless steel vessel, the solvent was removed under reduced pressure, and then the catalyst was added to the stainless steel vessel and pyrolysis was performed.
2) The soluble polymers used are as follows:

(P1): Soluble polymer composition obtained in Example 58
(P2): Purified soluble polymer composition obtained in Example 59

3) The details of the catalysts used in Examples 87-99 are as follows:

CP811-E75: CP811-E75 (H-beta type zeolite, $SiO_2/Al_2O_3$ = 75) manufactured by Zeolyst International
CBV780: CBV780 (H-SDUSY type zeolite, $SiO_2/Al_2O_3$ = 81) manufactured by Zeolyst International
CBV8020: CBV8020 (H-ZSM-5 type zeolite, $SiO_2/Al_2O_3$ = 85) manufactured by Zeolyst International
CBV8011G: CBV8011G (Na-ZSM-5 type zeolite, $SiO_2/Al_2O_3$ = 80) manufactured by Zeolyst International
CBV28011G: CBV28011G (Na-ZSM-5 type zeolite, $SiO_2/Al_2O_3$ = 280) manufactured by Zeolyst International
CBV100: CBV100 (Na-Y type zeolite, $SiO_2/Al_2O_3$ = 5) manufactured by Zeolyst International
HSZ-320NAA: HSZ-320NAA (Na-Y type zeolite, $SiO_2/Al_2O_3$ = 6) manufactured by Tosoh Corporation
Activated carbon (032-18091): Activated carbon 032-18091 manufactured by Fujifilm Wako Pure Chemical Corporation
Activated carbon (035-18101): Activated carbon 035-18101 manufactured by Fujifilm Wako Pure Chemical Corporation
Pd/C (Pd 5 wt%): Palladium on activated carbon (5 wt%) 205680 manufactured by Merck (Sigma-Aldrich)
Silica gel (37559-79): Silica gel 37559-79 manufactured by Kanto Chemical Co., Inc.
Activated alumina (019-08295): Activated alumina 019-08295 manufactured by Fujifilm Wako Pure Chemical Corporation
Montmorillonite K10 (281522): Montmorillonite K10 281522 manufactured by Merck (Sigma-Aldrich)

4) The yields of isoprene and limonene were calculated by the absolute calibration curve method. The yields of hydrocarbons with 1 to 5 carbon atoms and hydrocarbons with 5 to 10 carbon atoms (excluding isoprene and limonene) were calculated based on the area ratio of each hydrocarbon peak in gas chromatographic analysis.

5) Hydrocarbons with 1 to 4 carbon atoms.

6) Hydrocarbons with 5 to 10 carbon atoms (excluding isoprene and limonene).

The results in Table 4 indicate that, in both cases of the unpurified soluble polymer composition (P1) and the soluble polymer composition (P2) purified by the reprecipitation method, the isoprene yield is maximized by performing pyrolysis at a temperature range around 700-750°C.

Furthermore, regarding the effect of the catalyst, (1) basic catalysts (such as $Na_2CO_3$, $K_2CO_3$) tend to be favorable for isoprene production (Examples 85, 86), and (2) zeolite-based acidic catalysts (such as CP811-E75, CBV780, CBV8020) tend to increase the C1-C4 components (Examples 87-89).

(Example 100)

A mixture of 100 mg of vulcanized rubber sample A, 14.8 mg of benzoyl peroxide, and 1.6 mL of toluene was stirred with a magnetic stirrer using a Teflon® rotor in a 10 mL vial (sealed) under an air atmosphere at 60°C for 1 hour to perform the decomposition reaction. The yield of the soluble polymer generated by the decomposition of the vulcanized rubber was calculated by $^1$H NMR measurement of the reaction solution, and the yield was calculated to be 68%. Further, by GPC measurement, the molecular weight was estimated to be Mw = 57,900, Mn = 15,100, and Mw/Mn = 3.8.

(Example 101)

Except that the decomposition reaction time was set to 2 hours instead of 1 hour in Example 100, the decomposition reaction was performed and the product was analyzed in the same manner as in Example 100. As a result, the yield of the soluble polymer was calculated to be 87%, and the molecular weight of the soluble polymer was estimated to be Mw = 64,600, Mn = 21,200, and Mw/Mn = 3.0.

(Example 102)

Except that 18.4 mg of lauroyl peroxide was used instead of 14.8 mg of benzoyl peroxide in Example 100, the decomposition reaction was performed and the product was analyzed in the same manner as in Example 100. As a result, the yield of the soluble polymer was calculated to be 85%, and the molecular weight of the soluble polymer was estimated to be Mw = 59,800, Mn = 21,600, and Mw/Mn = 2.8.

Comparing the yield of the soluble polymer with that in Example 100, the yield was 68% when benzoyl peroxide was used, but 85% when lauroyl peroxide was used, indicating that the decomposition reaction proceeds more rapidly when lauroyl peroxide is used.

(Example 103)

Except that the decomposition reaction time was set to 2 hours instead of 1 hour in Example 102, the decomposition reaction was performed and the product was analyzed in the same manner as in Example 102. As a result, the yield of the soluble polymer was calculated to be 88%, and the molecular weight of the soluble polymer was estimated to be Mw = 37,100, Mn = 14,800, and Mw/Mn = 2.6.

Comparing the molecular weight of the soluble polymer with that in Example 101, when benzoyl peroxide was used, Mw = 64,600, Mn = 21,200, and Mw/Mn = 3.0, but when lauroyl peroxide was used, Mw = 37,100, Mn = 14,800, and Mw/Mn = 2.6, indicating that the decomposition reaction proceeds more rapidly and a soluble polymer with a lower molecular weight is obtained when lauroyl peroxide is used.

(Example 104)

Except that ethylbenzene was used as the solvent instead of toluene in Example 100, the decomposition reaction was performed and the product was analyzed in the same manner as in Example 100. As a result, the yield of the soluble polymer was calculated to be 87%, and the molecular weight of the soluble polymer was estimated to be Mw = 35,800, Mn = 14,000, and Mw/Mn = 3.0.

Comparing the yield of the soluble polymer with that in Example 100, the yield was 68% when toluene was used as the solvent, but 87% when ethylbenzene was used as the solvent, indicating that the decomposition reaction proceeds more rapidly when ethylbenzene is used as the solvent.

(Example 105)

Except that the decomposition reaction time was set to 2 hours instead of 1 hour in Example 104, the decomposition reaction was performed and the product was analyzed in the same manner as in Example 104. As a result, the yield of the soluble polymer was calculated to be 88%, and the molecular weight of the soluble polymer was estimated to be Mw = 35,300, Mn = 13,900, and Mw/Mn = 2.5.

Comparing the molecular weight of the soluble polymer with that in Example 101, when toluene was used as the solvent, Mw = 64,600, Mn = 21,200, and Mw/Mn = 3.0, but when ethylbenzene was used as the solvent, Mw = 35,300, Mn = 13,900, and Mw/Mn = 2.5, indicating that the decomposition reaction proceeds more rapidly and a soluble polymer with a lower molecular weight is obtained when ethylbenzene is used as the solvent.

(Example 106)

Except that 18.4 mg of lauroyl peroxide was used instead of 14.8 mg of benzoyl peroxide in Example 104, the decomposition reaction was performed and the product was analyzed in the same manner as in Example 104. As a result, the yield of the soluble polymer was calculated to be 88%, and the molecular weight of the soluble polymer was estimated to be Mw = 43,300, Mn = 17,000, and Mw/Mn = 2.5.

(Example 107)

Except that the decomposition reaction time was set to 2 hours instead of 1 hour in Example 106, the decomposition reaction was performed and the product was analyzed in the same manner as in Example 106. As a result, the yield of the soluble polymer was calculated to be 88%, and the molecular weight of the soluble polymer was estimated to be Mw = 27,600, Mn = 11,700, and Mw/Mn = 2.4.

(Example 108)

As a pretreatment step, 10 g of vulcanized rubber sample A was immersed in 100 mL of toluene solvent and shaken and stirred at room temperature for one day to elute additives in the vulcanized rubber. The vulcanized rubber was then removed from the solution and dried under reduced pressure. A mixture of 200 mg of the vulcanized rubber sample A after the pretreatment step, 7.3 mg of lauroyl peroxide, and 3.2 mL of chloroform was stirred with a magnetic stirrer using a Teflon® rotor in a 30 mL vial (sealed) under an air atmosphere at room temperature for one day to perform the decomposition reaction. The yield of the soluble polymer generated by the decomposition of the vulcanized rubber was calculated by $^1$H NMR measurement of the reaction solution, and the yield was calculated to be 84%. Further, by GPC measurement, the molecular weight was estimated to be Mw = 70,200, Mn = 20,700, and Mw/Mn = 3.4.

When the pretreatment step was not performed, the yield of the soluble polymer under the same decomposition reaction conditions was 11 %, indicating that the pretreatment step promotes the decomposition reaction.

(Example 109)

Except that the decomposition reaction time was set to 2 days instead of 1 day in Example 108, the pretreatment and decomposition reaction were performed and the product was analyzed in the same manner as in Example 108. As a result, the yield of the soluble polymer was calculated to be 86%, and the molecular weight of the soluble polymer was estimated to be Mw = 57,100, Mn = 17,700, and Mw/Mn = 3.2.

When the pretreatment step was not performed, the yield of the soluble polymer under the same decomposition reaction conditions was 13%, indicating that the pretreatment step promotes the decomposition reaction.

(Example 110)

Except that 40 mL of acetone solvent was used instead of 100 mL of toluene solvent in the pretreatment step of Example 108, the pretreatment and decomposition reaction were performed and the product was analyzed in the same manner as in Example 108. As a result, the yield of the soluble polymer was calculated to be 83%, and the molecular weight of the soluble polymer was estimated to be Mw = 67,800, Mn = 21,100, and Mw/Mn = 3.2.

(Example 111)

Except that the decomposition reaction time was set to 2 days instead of 1 day in Example 110, the pretreatment and decomposition reaction were performed and the product was analyzed in the same manner as in Example 110. As a result, the yield of the soluble polymer was calculated to be 84%, and the molecular weight of the soluble polymer was estimated to be Mw = 62,500, Mn = 18,600, and Mw/Mn = 3.4.

INDUSTRIAL APPLICABILITY

According to the present disclosure, since an efficient decomposition method for vulcanized rubber related to chemical recycling of vulcanized rubber and the like can be provided, the utility value of the present disclosure is high, and its industrial significance is considerable.

**Claims**

1.    A decomposition method for vulcanized rubber comprising:

a first decomposition step of causing a radical initiator to act on vulcanized rubber or a composition containing the vulcanized rubber under an atmosphere containing oxygen gas to thereby cause conversion into a soluble decomposition product; and
a second decomposition step of converting the soluble decomposition product obtained in the first decomposition step into a low molecular weight compound having 10 or fewer carbon atoms through thermal decomposition.

2.    The decomposition method according to claim 1,
wherein a rubber component of the vulcanized rubber is a rubber component including at least one selected from natural rubber (NR), synthetic isoprene rubber (IR), butadiene rubber (BR), and styrene-butadiene rubber (SBR).

3.    The decomposition method according to claim 1,
wherein the composition containing the vulcanized rubber is a composition selected from tire rubbers containing carbon black or silica.

4.    The decomposition method according to claim 1,
wherein the radical initiator is a radical initiator selected from azo compounds and peroxides.

5.    The decomposition method according to claim 4,
wherein the peroxide is a peroxide selected from acyl peroxides.

6.    The decomposition method according to claim 5,
wherein the acyl peroxide is an acyl peroxide selected from benzoyl peroxide, lauroyl peroxide, and acetyl peroxide.

7.    The decomposition method according to claim 1,
wherein the thermal decomposition in the second decomposition step is thermal decomposition where a reaction is performed in a temperature range of 400°C to 900°C.

8.    The decomposition method according to claim 1,
wherein the thermal decomposition in the second decomposition step is thermal decomposition where a reaction is performed in the presence of a catalyst.

9.    The decomposition method according to claim 1,
wherein a decomposition method in the first decomposition step is a decomposition method using a chlorinated hydrocarbon or an aromatic hydrocarbon as a solvent.

10.    The decomposition method according to claim 9,
wherein the chlorinated hydrocarbon is a chlorinated hydrocarbon selected from chloroform and chlorobenzene.

11.    The decomposition method according to claim 9,
wherein the aromatic hydrocarbon is ethylbenzene.

12.    The decomposition method according to claim 1,
wherein the vulcanized rubber is vulcanized rubber that has undergone a pretreatment step of washing with a solvent.

## INTERNATIONAL SEARCH REPORT

| | International application No. |
|---|---|
| | **PCT/JP2024/026173** |

| | | |
|---|---|---|
| **A.** | **CLASSIFICATION OF SUBJECT MATTER** | |
| | *C08C 19/08*(2006.01)i; *C08J 11/10*(2006.01)i | |
| | FI: C08C19/08; C08J11/10 | |
| According to International Patent Classification (IPC) or to both national classification and IPC | | |

| | |
|---|---|
| **B.** | **FIELDS SEARCHED** |
| Minimum documentation searched (classification system followed by classification symbols) | |
| C08C19/08; C08J11/10 | |
| Documentation searched other than minimum documentation to the extent that such documents are included in the fields searched | |
| Published examined utility model applications of Japan 1922-1996<br>Published unexamined utility model applications of Japan 1971-2024<br>Registered utility model specifications of Japan 1996-2024<br>Published registered utility model applications of Japan 1994-2024 | |
| Electronic data base consulted during the international search (name of data base and, where practicable, search terms used) | |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2001-240871 A (TOSHIBA PLANT KENSETSU COMPANY, LIMITED) 04 September 2001 (2001-09-04)<br>      claims, paragraphs [0001], [0008]-[0010], [0016], [0035], examples | 1-4, 7-8, 12 |
| X | JP 2004-315766 A (THE YOKOHAMA RUBBER CO., LTD.) 11 November 2004 (2004-11-11)<br>      claims, paragraphs [0007], [0019]-[0021], [0024]-[0027], [0031], [0033], examples | 1-3, 8-9, 11-12 |
| Y | | 11 |
| A | JP 2007-106919 A (TOYO TIRE & RUBBER CO., LTD.) 26 April 2007 (2007-04-26)<br>      claims, paragraph [0029], examples | 1-12 |
| Y | JP 56-041202 A (BRIDGESTONE TIRE CO., LTD.) 17 April 1981 (1981-04-17)<br>      claims, p. 2, upper right column, lines 1-5, p. 2, lower left column, line 8 to p. 3, upper left column, line 18, p. 3, lower left column, line 9 to lower right colmn, line 2, examples | 1-12 |
| Y | JP 2000-119438 A (THE YOKOHAMA RUBBER CO., LTD.) 25 April 2000 (2000-04-25)<br>      claims, paragraphs [0008], [0017]-[0024], [0032], [0039], [0051], examples | 1-12 |

| | | | |
|---|---|---|---|
| ✓ Further documents are listed in the continuation of Box C. | | ✓ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| **09 August 2024** | **20 August 2024** |
| Name and mailing address of the ISA/JP | Authorized officer |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2024/026173** |

### C. DOCUMENTS CONSIDERED TO BE RELEVANT

| Category* | Citation of document, with indication, where appropriate, of the relevant passages | Relevant to claim No. |
|---|---|---|
| Y | JP 2002-265664 A (THE YOKOHAMA RUBBER CO., LTD.) 18 September 2002 (2002-09-18) claims, paragraphs [0004], [0006], [0011], [0020], [0030], [0034], examples | 1-12 |
| Y | JP 60-040193 A (FRIED KRUPP GMBH) 02 March 1985 (1985-03-02) claims, p. 3, upper left column, lines 13-15, examples | 11 |

Form PCT/ISA/210 (second sheet) (July 2022)

## INTERNATIONAL SEARCH REPORT
### Information on patent family members

International application No.

**PCT/JP2024/026173**

| Patent document cited in search report | | | Publication date (day/month/year) | Patent family member(s) | Publication date (day/month/year) |
|---|---|---|---|---|---|
| JP | 2001-240871 | A | 04 September 2001 | US 2003/0196883 A1 claims, paragraphs [0001], [0008]-[0009], [0040], [0051], examples EP 1130076 A2 | |
| JP | 2004-315766 | A | 11 November 2004 | (Family: none) | |
| JP | 2007-106919 | A | 26 April 2007 | (Family: none) | |
| JP | 56-041202 | A | 17 April 1981 | US 4305850 A claims, column 1, lines 38-42, column 2, lines 7-63, column 3, lines 26-45, examples | |
| JP | 2000-119438 | A | 25 April 2000 | US 6525105 B1 claims, column 4, line 51 to column 5, line 38, column 11, line 13 to column 13, line 35, column 21, lines 10-25, column 25, lines 6-13, examples WO 2000/069953 A1 EP 1113041 A1 | |
| JP | 2002-265664 | A | 18 September 2002 | (Family: none) | |
| JP | 60-040193 | A | 02 March 1985 | US 4642401 A claims, column 3, lines 51-53, examples EP 132612 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3704108 A
- JP H07310076 A
- JP 2009247241 A